# EUROPEAN PATENT APPLICATION

(11) **EP 1 953 423 A2**
(43) Date of publication of application: **06.08.2008**
(21) Application number: 07024789.5
(22) Date of filing: 20.12.2007
(51) Int. Cl.: F16H 59/02

(54) **Shift lever apparatus for automatic transmission**

(30) Priority: 26.12.2006 JP 2006349383
(71) Applicant: FUJI KIKO Co., Ltd., Kosai-shi, Shizuoka 431-0431 (JP)
(72) Inventor: Takikawa, Yoshihiro, Kosai-shi Shizuoka 431-0431 (JP)
(74) Representative: Grünecker, Kinkeldey, Stockmair & Schwanhäusser Anwaltssozietät

(57) **Abstract**

A shift lever apparatus for an automatic transmission includes: a lever main body including a rod insertion hole provided thereto and a receiving member insertion hole, and swingably supported by a shifter main body; a compression rod inserted in the rod insertion hole from a lower end of the lever main body; a spring, inserted into the rod insertion hole from the lower end of the lever main body, for pressing the compression rod toward an upper end of the lever main body; and a spring receiving member inserted into the receiving member insertion hole, and including a concave portion for holding a lower end of the spring.

## Description

The present disclosure relates to subject matters contained in Japanese Patent Application No. 2006-349383 filed on December 26, 2006, the disclosure of which is expressly incorporated herein by reference in its entirety.

### BACKGROUND OF THE INVENTION

### 1. Field of the Invention

The present invention relates to a shift lever apparatus for an automatic transmission mounted on an automobile or the like.

### 2. Description of Related the Art

An example of shift lever apparatuses of a conventional type for automatic transmissions is a shift lever apparatus disclosed in Japanese Patent Application Laid-open Publication No. Hei. 9-263151. As shown in Fig. 1, a shift lever apparatus 100 for an automatic transmission includes a lever main body 101 swingably provided to a shifter main body (not illustrated). This lever main body 101 includes an arm unit 102 and an axle unit 103 fitted into the lower end of the arm unit 102. The arm unit 102 is provided with a rod insertion hole 104 in its axial direction, and with a position pin insertion hole (not illustrated) which penetrates through the rod insertion hole 104 in a direction orthogonal to the axial direction. The diameter of the rod insertion hole 104 is reduced in the front end. A rod 105 and a spring 106 are inserted into the rod insertion hole 104 from the lower end of the arm unit 102. Through the position pin insertion hole (not illustrated), a position pin 107 is inserted into the rod 105 which has been inserted in the rod insertion hole 104, and is fixed to the rod 105 by press-fit. The lower end of the spring 106 inserted in the rod insertion hole 104 is held by a spring holding protrusion 103a of the axle unit 103. Spring force of this spring 106 presses the rod 105 upward.

In this configuration, when a knob button (not illustrated) provided to the upper end of the lever main body 101 is operated by press-down, the rod 105 is displaced downward by this press-down operation against the spring 106. Accordingly, the position pin 107 is displaced downward together with the rod 105. The downward displacement of this position pin 107 makes the lever main body 101 swingable, and enables the lever main body 101 to change its shift positions.

In the case of the shift lever apparatus 100 of the conventional type for an automobile transmission, however, the lever main body 101 is divided into the arm unit 102 and the axle unit 103 in order that the rod 105 and the spring 106 can be inserted into the rod insertion hole 104 of the lever main body 101 from the lower end of the lever main body 101. The shift lever apparatus 100 has a problem that the lever main body 101 has to be configured of the two units, that is to say, the arm unit 102 and the axle unit 103, and another problem that the structure of the lever main body 101 is complicated because the structure has to enable the arm unit 102 and the axle unit 103 to be assembled with each other after the rod 105 and the spring 106 are inserted.

### SUMMARY OF THE INVENTION

The present invention has been achieved with such points in mind.

It therefore is an object of the present invention to provide a shift lever apparatus for an automobile transmission, which makes it possible to enhance the assemblage quality of the lever main body, and to simplify the structure of the lever main body.

To achieve the object, according to a first aspect of the present invention, there is provided a shift lever apparatus for an automatic transmission including: a lever main body including a rod insertion hole provided thereto along the center axis thereof, and a receiving member insertion hole penetrating through the rod insertion hole in a direction orthogonal to the center axis, the lever main body being swingably supported by a shifter main body; a compression rod inserted in the rod insertion hole from a lower end of the lever main body; a spring, inserted in the rod insertion hole from the lower end of the lever main body, for pressing the compression rod toward an upper end of the lever main body; and a spring receiving member, made of a plate-shaped member, inserted in the receiving member insertion hole, and including a concave portion for holding a lower end of the spring.

According to a second aspect of the present invention, as it depends from the first aspect, there is provided a shift lever apparatus for an automatic transmission wherein the spring receiving member includes a slit in order that a spring lifting jig to be inserted into the rod insertion hole from under is capable of being further inserted into the slit, and in a direction in which the spring receiving member is inserted into the receiving member insertion hole.

According to a third aspect of the present invention, as it depends from the first or the second aspect, there is provided a shift lever apparatus for an automatic transmission wherein the cross-sectional shape of the concave portion is virtually the same as that of the rod insertion hole, and in that the spring receiving member is formed in a way that, when the spring receiving member is set in a position which causes the spring receiving member to be inserted in the receiving member insertion hole completely (hereinafter referred to as an "insertion completion position"), the center of the concave portion thereof is positioned at the center position of the rod insertion hole.

According to a fourth aspect of the present invention, as it depends from the one aspect among the first to the third aspect, there is provided a shift lever apparatus for an automatic transmission wherein the shape of the upper surface of the spring receiving member is different from that of the lower surface thereof, and in that an opening portion of the receiving member insertion hole is shaped to fit the cross-sectional shapes respectively of the upper and lower surfaces of the spring receiving member.

According to a fifth aspect of the present invention, as it depends from the one aspect among the first to the fourth aspect, there is provided a shift lever apparatus for an automatic transmission wherein the lever main body includes a stopper part which is positioned inside the receiving member insertion hole, and which abuts on a deepest surface inside the slit when the spring receiving member is set in an insertion completion position.

In the case of the first aspect, because the lower end of the spring accommodated in the lever main body is received by the spring receiving member, the axle unit is capable of being formed in a way that the axle unit is integrated into the lever main body. Unlike the lever main body according to the conventional example, the axle unit need no longer be fitted into the lever main body according to the first aspect. In addition, neither the lever main body nor the axle unit need be provided with a structure which would otherwise enable the axle unit to be fitted into the lever main body. This makes it possible to enhance the assemblage quality of the lever main body, and to simplify the structure thereof. Furthermore, because the lower end portion of the spring is held in the condition of being set in the concave portion of the spring receiving member, the spring serves as a lock for preventing the spring receiving member from coming off. This makes additional measures unnecessary to prevent the spring receiving member from coming off. Moreover, because the lower end of the spring is held by the bottom surface of the concave portion, or by the flat surface, this increases the reliability with which the spring is held by the spring receiving member, and makes the spring behave stably when the spring expands and contracts.

The second aspect of the present invention brings about the effects of the first aspect of the present invention, and additionally makes it possible to carry out work for inserting the spring receiving member into the receiving member insertion hole easily. This is because the spring is compressed by use of the spring lifting jig inserted in the rod insertion hole, and the spring receiving member is capable of being inserted into the receiving member insertion hole while the spring lifting jig is in the condition of being inserted therein.

The third aspect of the present invention brings about the effects of any one of the first and second aspects of the present invention, and additionally makes it possible to center the concave portion easily and securely. This is because, when the spring receiving member is inserted in the receiving member insertion hole completely, the concave portion is positioned at the center position of the rod insertion hole.

The fourth aspect of the present invention brings about the effects of any one of the first to third aspect of the present invention, and accordingly makes it possible to prevent the spring receiving member from being inserted into the receiving member insertion hole upside down. This is because the spring receiving member is designed to be incapable of being inserted thereto completely while inserted upside down.

The fifth aspect of the present invention brings about the effects of the second aspect of the present invention, and additionally makes it possible to simplify the structure of the spring receiving member. This is because the lever main body includes the stopper part designed to enter the slit in the spring receiving member inserted into the receiving member insertion hole, because the stopper part is configured to restrict the insertion of the spring receiving member into the receiving member insertion hole by the abutment of the stopper part on the deepest surface inside the slit, and because, as a result, this configuration is capable of making the slit perform a function of causing the spring lifting jig (not illustrated) and the spring receiving member to be inserted in the slit simultaneously, and a function of centering the concave portion in the spring receiving member.

### BRIEF DESCRIPTION OF THE ACCOMPANYING DRAWINGS

The above and further objects and novel features of the present invention will more fully appear from the following detailed description when the same is read in conjunction with the accompanying drawings, in which:

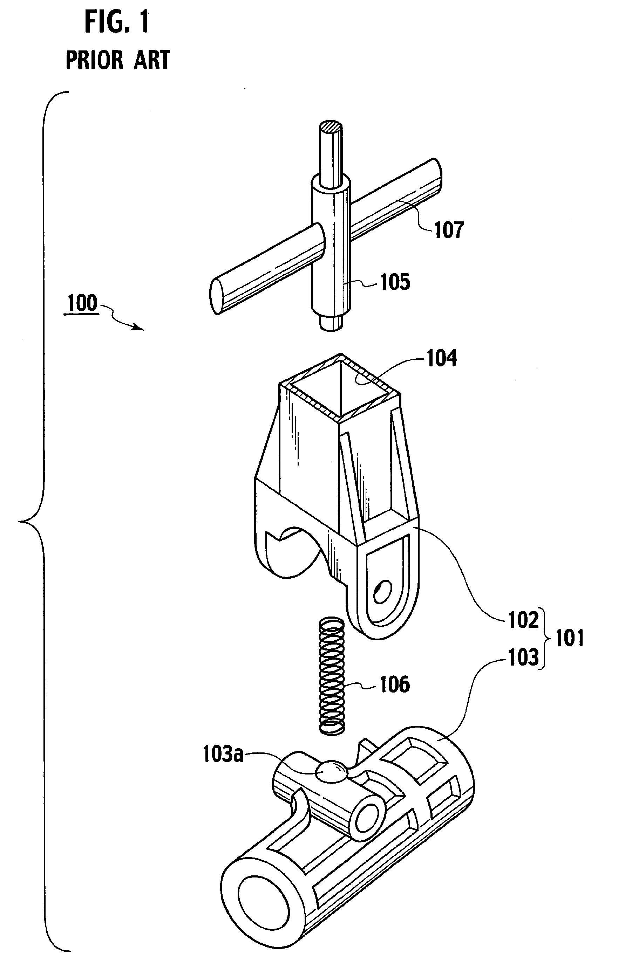

Fig. 1 is an exploded perspective view of a chief part of a shift lever apparatus for an automatic transmission according to a conventional example;
Fig. 2 shows an embodiment of the present invention, and is a front view of a shift lever apparatus for an automatic transmission;
Fig. 3 shows the embodiment of the present invention, and is a side view of the shift lever apparatus for an automatic transmission;
Fig. 4 shows the embodiment of the present invention, and is a cross-sectional view of the shift lever apparatus for an automatic transmission taken along the IV-IV line of Fig. 2;
Fig. 5 shows the embodiment of the present invention, and is a cross-sectional view of the shift lever apparatus for an automatic transmission taken along V-V line of Fig. 3;
Fig. 6 shows the embodiment of the present invention, and is a cross-sectional view of the shift lever apparatus for an automatic transmission taken along the VI-VI line of Fig. 4;
Figs. 7A to 7C show the embodiment of the present invention. Fig. 7A is a plan view of a spring receiving member, Fig. 7B is a front view of the spring receiving member, Fig. 7C is a cross-sectional view of the spring receiving member taken along the VIIC-VIIC line of Fig. 7B;
Fig. 8 shows the embodiment of the present invention, and is an exploded perspective view illustrating a sequence with which a lever main body is assembled; and
Fig. 9 shows the embodiment of the present invention, and is a perspective view illustrating how the spring receiving member is inserted into the lever main body.

### DETAILED DESCRIPTION OF THE PREFERRED EMBODIMENTS

There will be detailed below the preferred embodiments of the present invention with reference to the accompanying drawings. Like members are designated by like reference characters.

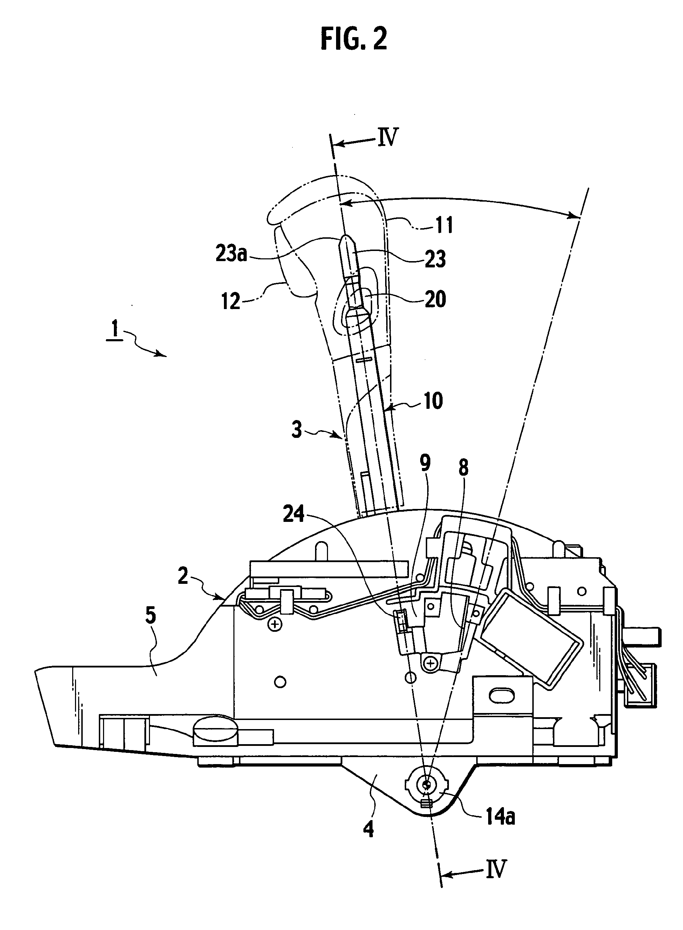

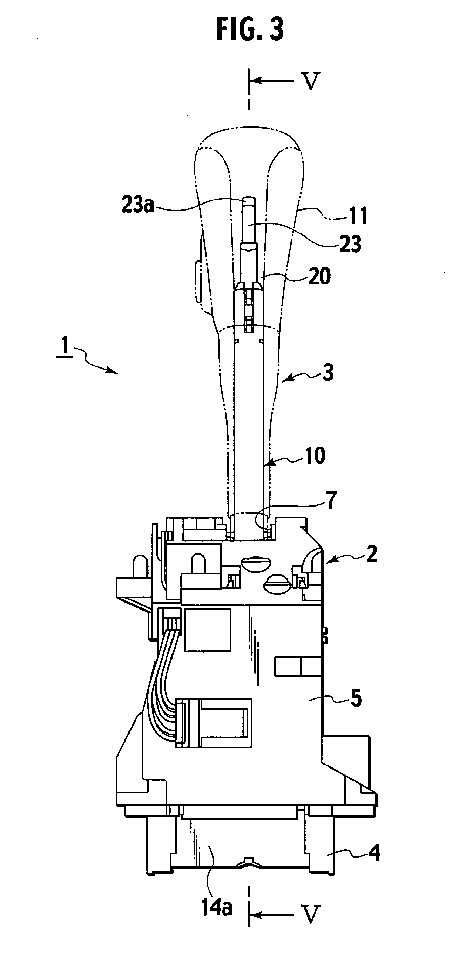

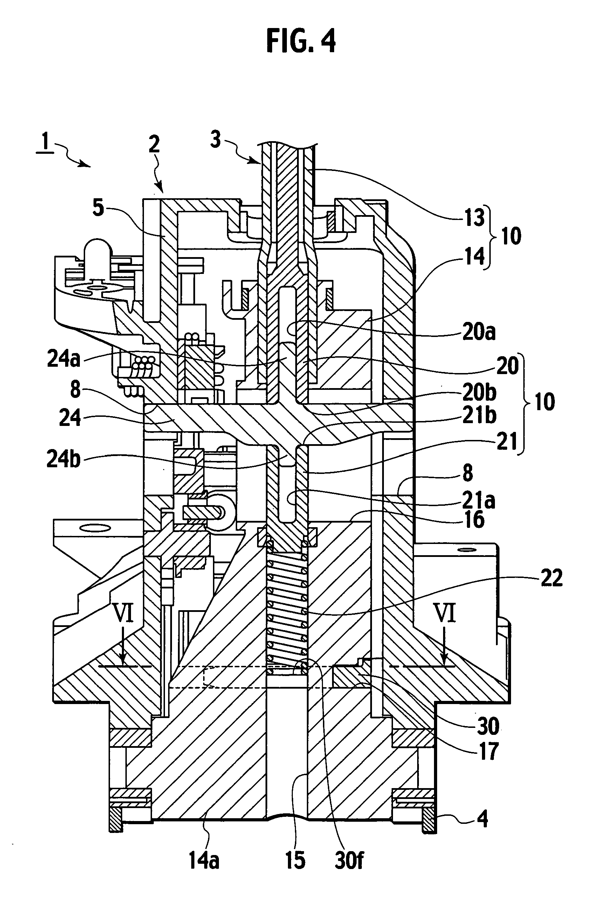

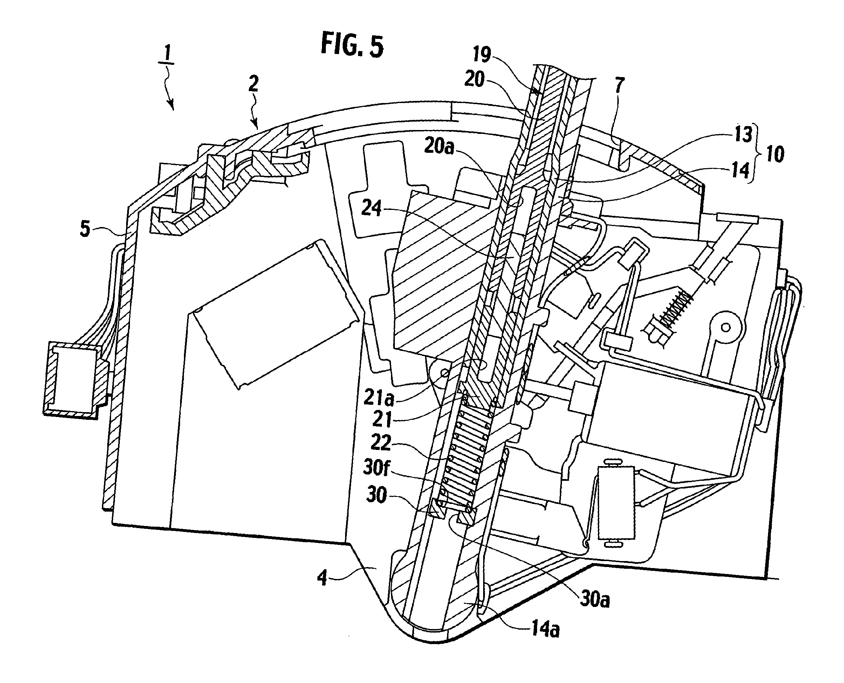

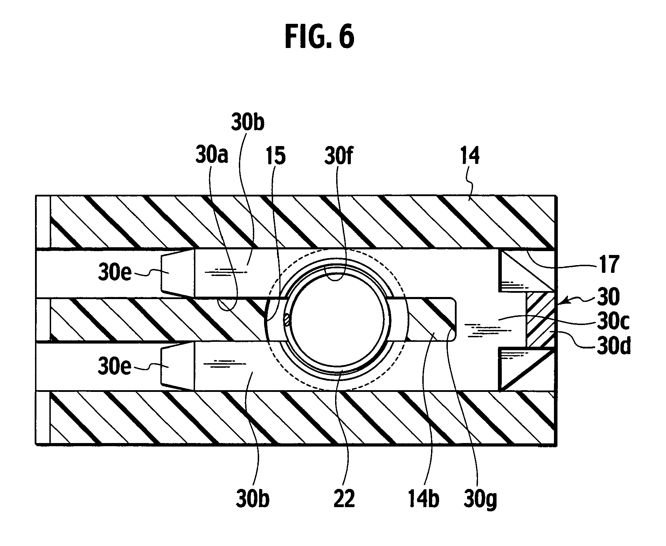

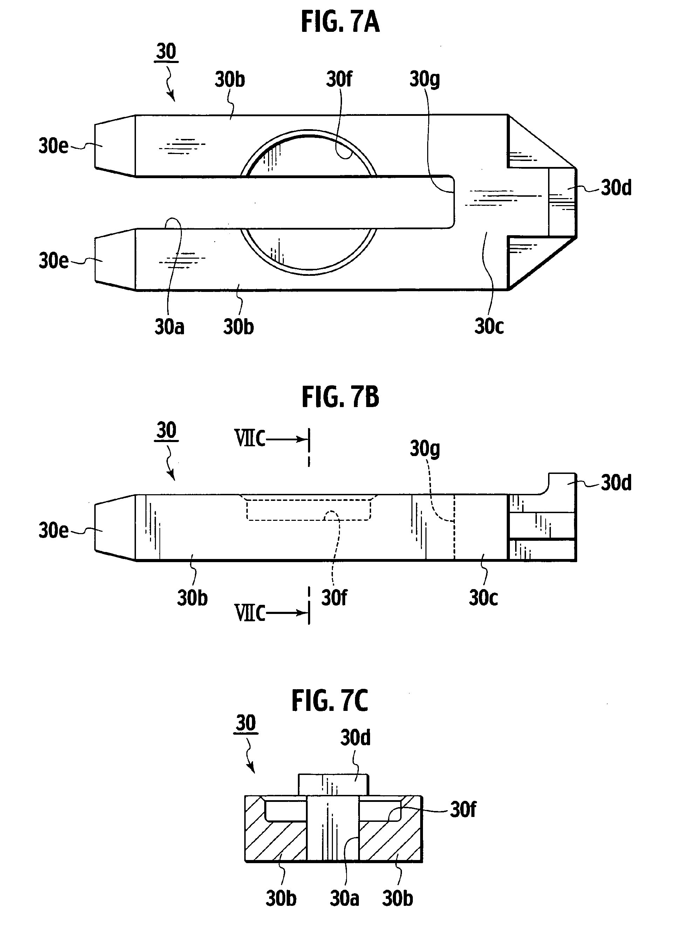

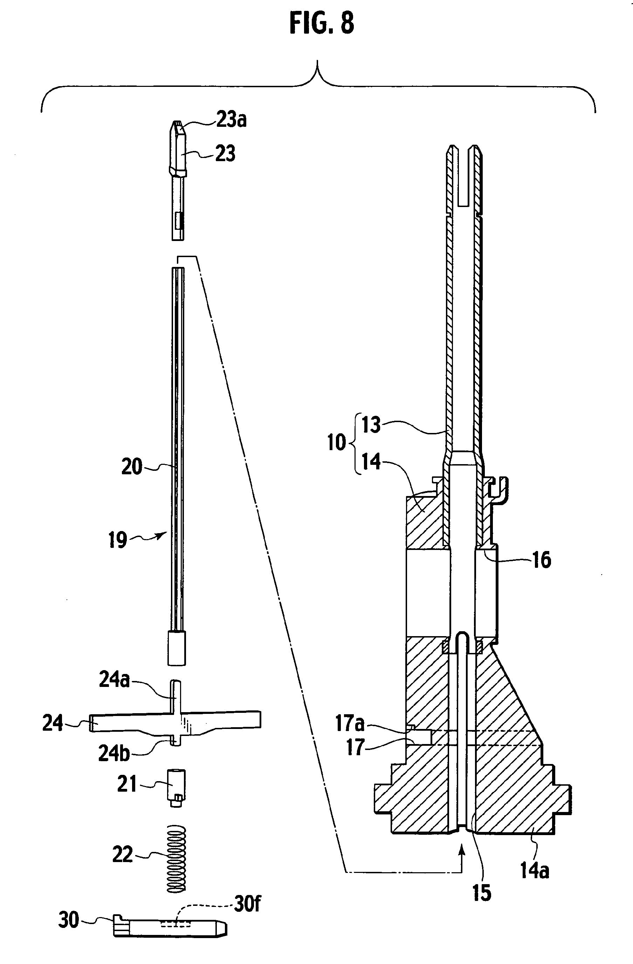

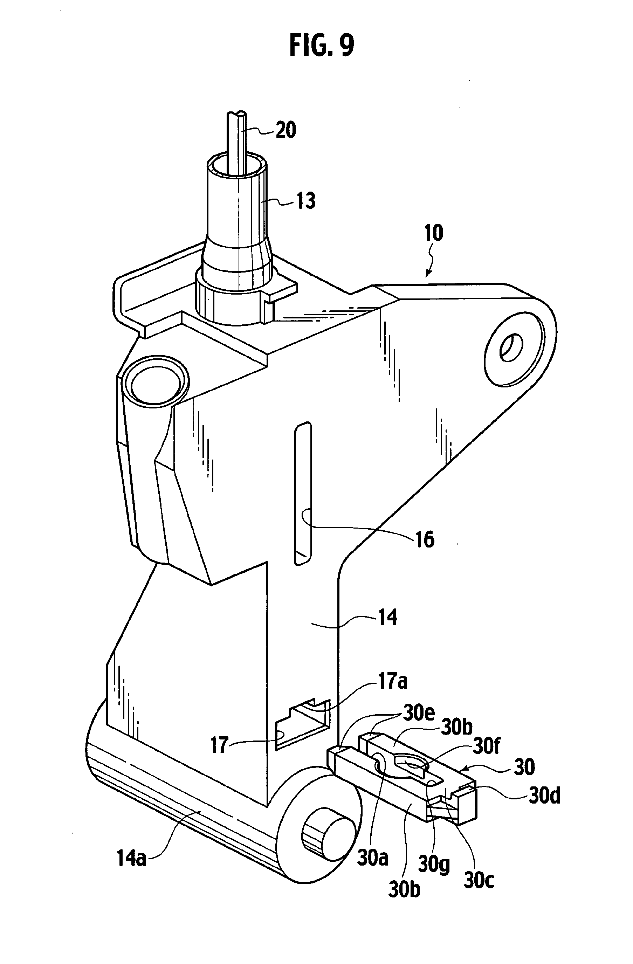

Figs. 2 to 9 show the embodiment of the present invention. Fig. 2 is a front view of a shift lever apparatus for an automatic transmission. Fig. 3 is a side view of the shift lever apparatus for an automatic transmission. Fig. 4 is a cross-sectional view of the shift lever apparatus for an automatic transmission taken along the IV-IV line of Fig. 2. Fig. 5 is a cross-sectional view of the shift lever apparatus for an automatic transmission taken along the V-V line of Fig. 3. Fig. 6 is a cross-sectional view of the shift lever apparatus for an automatic transmission taken along the VI-VI line of Fig. 4. Fig. 7A is a plan view of a spring receiving member. Fig. 7B is a front view of the spring receiving member. Fig. 7C is a cross-sectional view of the spring receiving member taken along the VIIC-VIIC line of Fig. 7B. Fig. 8 is an exploded perspective view illustrating the sequence with which a lever main body is assembled. Fig. 9 is a perspective view illustrating how the spring receiving member is inserted into the lever main body. It should be noted that, in the embodiment below, a direction which points toward and beyond the front end of the lever main body is referred to as "upward," whereas a direction which points toward and beyond the base end of the lever main body is referred to as "downward."

As shown in Figs 2 to 5, a shift lever apparatus 1 for an automatic transmission includes a shifter main body 2 fixed to the vehicle body, and an operation lever 3 jutting out upward from the shifter main body 2.

The shifter main body 2 includes a pivotal-support part 4 and a main body bracket 5 arranged to cover the upper portion of this pivotal-support part 4. An operation lever movement hole 7 is formed in the upper surface of the main body bracket 5, and position holes 8 and 8 including lever position restricting parts 9 and 9 (shown in Fig. 2) are provided to the right and left sides of the main body bracket 5, respectively.

The operation lever 3 is configured of a lever main body 10 and a knob part 11 fixed to an upper end portion of this lever main body 10. A knob button 12 for releasing a lock on the operation lever 3 is provided to the knob part 11.

As shown in Figs. 2 to 5 and Fig. 8, the lever main body 10 is of a straight type swingably upheld by the shifter main body 2 in a uniaxial direction. The lever main body 10 is configured of a metallic cylindrical part 13 and a base part 14 made of a synthetic resin, which is fixed to the lower end of this cylindrical part 13 in an integral manner. A cylindrical axle unit 14a is formed as being integrated with the base part 14. The axle unit 14a is rotatably supported by the pivotal-support part 4.

A rod insertion hole 15 is formed in the axial direction of the cylindrical part 13 and the base part 14 of the lever main body 10. The rod insertion hole 15 is opened at both the upper and lower ends of the lever main body 10. The dimension of the rod insertion hole 15 at the lower end is set to be a dimension slightly larger than the diameter of a spring 22 to be described later. The diameter of the rod insertion hole 15 at the upper end is reduced in comparison with the diameter thereof at the lower end.

A position pin insertion hole 16 penetrating through the rod insertion hole 15 and a receiving member insertion hole 17 similarly penetrating through the rod insertion hole 15 below the position pin insertion hole 16 are formed in a direction orthogonal to the axial direction of the cylindrical part 13 and the base part 14 of the lever main body 10. The height dimension of the position pin insertion hole 16 is set sufficiently larger than the height dimension of a position pin 24, which will be described below.

A compression rod 19, the position pin 24, the spring 22 and a spring receiving member 30 are arranged in the rod insertion hole 15 of the lever main body 10. The compression rod 19 is configured of two members, that is, an upper rod 20 and a lower rod 21. Furthermore, a push rod 23 is arranged on the upper rod 20. A cam surface 23a is formed on the upper end surface of the push rod 23. This cam surface 23a is designed to convert a press-down operation of the knob button 12 to a downward displacement of the push rod 23.

An engagement hole 20a and a guide groove 20b penetrating the engagement hole 20a are formed inside the lower end portion of the upper rod 20, and an engagement hole 21a and a guide groove 21 b penetrating the engagement hole 21 a are formed inside the upper end portion of the lower rod 21.

The position pin 24 penetrates through the position pin insertion hole 16, and is interposed between the upper rod 20 and the lower rod 21. The position pin 24 engages with the guide grooves 20b and 21b respectively of the upper rod 20 and the lower rod 21. In addition, the upper and lower end portions of the position pin 24 are provided with engagement protrusions 24a and 24b, respectively. The engagement protrusion 24a protrudes upward, and the engagement protrusion 24b protrudes downward. The upward and downward engagement protrusions 24a and 24b engage with the engagement holes 20a and 21 a of the upper rod 20 and the lower rod 21, respectively. The position pin 24 is designed not to come off from the lever main body 10 by the engagement of the upward and downward engagement protrusions 24a and 24b respectively with the upper rod 20 and the lower rod 21. The two side end portions of the position pin 24 engage with the lever position restricting parts 9 and 9 of the position hole 8 while the lever main body 10 is being assembled with the shifter main body 2.

The spring receiving member 30 is inserted through the receiving member insertion hole 17 as being arranged into the rod insertion hole 15. As shown in Figs. 7A to 7C in detail, the spring receiving member 30 is made of a plate-shaped member, and includes: bifurcated insertion rod parts 30b and 30b separated by a slit 30a formed therein in a direction in which the spring receiving member 30 is inserted into the receiving member insertion hole 17; a backward connection part 30c to which these insertion rod parts 30b and 30b are connected; and a protrusion part 30d protruding from the upper surface of the this backward connection part 30c. The front ends of the bifurcated insertion rod parts 30b and 30b are formed as tapered parts 30e and 30e progressively narrowed toward their own ends, respectively. A circular concave part 30f is formed in the upper surfaces of the bifurcated insertion rod parts 30b and 30b, except for the slit 30a. The diameter of the concave part 30f is shaped into virtually the same as that of the cross-sectional shape of the lower end of the rod insertion hole 15, and simultaneously is set to be a dimension slightly larger than the diameter of the spring 22. The lower end portion of the spring 22 is held by this concave part 30f when the lower end portion enters the concave part 30f.

In addition, the receiving member insertion hole 17 is formed as a hole with a shape which fits, and is virtually the same as, the external shape of the spring receiving member 30. As shown in Fig. 6 in detail, a part of the base part 14 which the slit 30a of the spring receiving member 30 enters is formed as a stopper part 14b. The insertion of the spring receiving member 30 is restricted by causing a deepest surface 30g of the slit 30a to abut on the stopper part 14b. Furthermore, the concave part 30f is set to be positioned at the center position of the rod insertion hole 15 when the spring receiving member is set in the insertion completion position. As shown in Fig. 9 in detail, the receiving member insertion hole 17 includes a convex groove part 17a which the protrusion part 30d of the spring receiving member 30 enters. The spring receiving member 30 is designed to be capable of being inserted into the receiving member insertion hole 17 completely, if the member 30 is inserted therein in the right up and down directions. However, the spring receiving member 30 is designed to be incapable of being inserted therein completely, if the member 30 is inserted therein upside down.

Brief descriptions will be provided next for a sequence with which the operation lever 3 is assembled with the shift lever apparatus 1. In Fig. 8, the upper rod 20, the lower rod 21 and the spring 22 are sequentially inserted into the rod insertion hole 15 from the lower end of the lever main body 10.

Subsequently, a spring lifting jig (not illustrated) narrower than the slit 30a in the spring receiving member 30 is inserted into the rod insertion hole 15 from the lower end of the lever main body 10. Thereby, the spring 22 is squeezed upward, and is put in a compressed condition.

Thereafter, as shown in Fig. 9, the spring receiving member 30 is inserted into the receiving member insertion hole 17, and the spring receiving member 30 is inserted into a position under the spring 22 which has been put in the compressed condition. At this time, the spring receiving member 30 is capable of being inserted therein without interfering in the spring lifting jig (not illustrated) because of the slit 30a thereof.

Afterward, the spring lifting jig (not illustrated) is pulled out of the rod insertion hole 15. Thereby, the spring 22 which has been compressed expands, and thus the lower end of the spring 22 is held by the spring receiving member 30.

After that, the lever main body 10 is arranged in the main body bracket 5 in a way that the upper end portion of the lever main body 10 juts out from the operation lever movement hole 7, and the axle unit 14a of the lever main body 10 is rotatably attached to the pivotal-support part 4. At this time, the lever main body 10 is capable of being attached to the pivotal-support part 4 easily, because no position pin 24 is assembled with the lever main body 10.

Subsequently, by use of a insertion jig (not illustrated), the position pin 24 is inserted through one of the position holes 8 of the main body bracket 5 into the main body bracket 5; the position pin 24 thus inserted is penetrated through the position pin insertion hole 16 of the lever main body 10; and the opposite end portion of this position pin 24 thus penetrated is protruded through the other position hole 8 of the main body bracket 5. Thereby, the position pin 24 is interposed between the upper rod 20 and the lower rod 21, and the upward and downward engagement protrusions 24a and 24b of the position pin 24 are put in a condition of engaging with the engagement hole 20a of the upper rod 20 and the engagement hole 21a of the lower rod 21, respectively.

Through the foregoing sequence, the assembling of the upper rod 20, the lower rod 21, the spring 22, the position pin 24 and the spring receiving member 30 to the lever main body 10 is completed.

When, after this assemblage, the push rod 23 is inserted into the rod insertion hole 15 of the lever main body 10 from above and subsequently the knob part 11 is assembled to the upper portion of the lever main body 10, the assembling of the operation lever 3 therewith is completed.

In the case of the present invention, as has been described above, because the lower end of the spring 22 accommodated in the lever main body 10 is received by the spring receiving member 30, the axle unit 14a is capable of being formed in a way that the axle unit 14a is integrated into the lever main body 10 as in the case of the present embodiment. Unlike the lever main body according to the conventional example, the arm unit and the axle unit need no longer be assembled with each other in order to construct the lever main body. In addition, neither the lever main body nor the arm unit and the axle unit need be provided with a structure which would otherwise enable the axle unit and the arm unit to be assembled with each other. This makes it possible to enhance the assemblage quality of the lever main body 10, and to simplify the structure thereof. Furthermore, because the lower end portion of the spring 22 is held in the condition of being set in the concave portion 30f of the spring receiving member 30, the spring 22 serves as a lock for preventing the spring receiving member 30 from coming off. This makes additional measures unnecessary to prevent the spring receiving member 30 from coming off. Moreover, because the lower end of the spring 22 is held by the bottom surface of the concave portion 30f, that is to say, because almost the entire lower end surface of the spring 22 is held by the flat surface, this increases the reliability with which the spring 22 is held by the spring receiving member, and makes the spring 22 behave stably when the spring 22 expands and contracts.

The present embodiment makes it possible to easily carry out work for inserting the spring receiving member 30 into the receiving member insertion hole 17. This is because the spring receiving member 30 includes the slit 30a through which the spring lifting jig (not illustrated) inserted into the rod insertion hole 15 from under penetrates. This makes it possible to compress the spring 22 by use of the spring lifting jig (not illustrated) inserted in the rod insertion hole 15, and to accordingly insert the spring receiving member 30 into the receiving member insertion hole 17 while the spring lifting jig (not illustrated) is in the condition of being inserted therein.

The present embodiment makes it possible to center the concave portion 30f easily and securely. This is because, when the spring receiving member 30 is set in the insertion completion position, the concave portion 30f is positioned at the center position of the rod insertion hole 15.

The present embodiment makes it possible to prevent the spring receiving member 30 from being inserted into the receiving member insertion hole 17 while inserted upside down. This is because the spring receiving member 30 is designed to be incapable of being inserted into the receiving member insertion hole 17 completely while inserted upside down.

The present embodiment makes it possible to simplify the structure of the spring receiving member 30. This is because the lever main body 10 includes the stopper part 14b designed to enter the slit 30a in the spring receiving member 30 inserted into the receiving member insertion hole 17, because the stopper part 14b restricts the insertion of the spring receiving member 30 into the receiving member insertion hole 17 by the abutment of the stopper part 14b on the deepest surface 30g inside the slit 30a, and because, as a result, this configuration is capable of making the slit 30a perform a function of causing the spring lifting jig (not illustrated) and the spring receiving member 30 to be inserted in the slit 30a simultaneously, and a function of centering the concave portion 30f in the spring receiving member 30.

It should be noted that, although the compression rod 19 is configured of the two members, that is, the upper rod 20 and the lower rod 21 in the case of the present embodiment, the compression rod may be configured of a single rod. In the case where the compression rod is configured of the single rod, the position pin 24 is penetrated through the compression rod by press-fit or the like.

Although the invention has been described above by reference to certain embodiments of the invention, the invention is not limited to the embodiments described above. Modifications and variations of the embodiments descried above will occur to those skilled in the art, in light of the above teachings. The scope of the invention is defined with reference to the following claims.

## Claims

1. A shift lever apparatus for an automatic transmission, comprising:
a lever main body including a rod insertion hole provided thereto along the center axis thereof, and a receiving member insertion hole penetrating through the rod insertion hole in a direction orthogonal to the center axis, the lever main body being swingably supported by a shifter main body;
a compression rod inserted in the rod insertion hole from a lower end of the lever main body;
a spring, inserted into the rod insertion hole from the lower end of the lever main body, for pressing the compression rod toward an upper end of the lever main body; and
a spring receiving member, made of a plate-shaped member, inserted into the receiving member insertion hole, and including a concave portion for holding a lower end of the spring.

2. The shift lever apparatus for an automatic transmission according to claim 1, wherein
the spring receiving member includes a slit in order that a spring lifting jig to be inserted into the rod insertion hole from under is capable of being further inserted into the slit, and in a direction in which the spring receiving member is inserted into the receiving member insertion hole.

3. The shift lever apparatus for an automatic transmission according to claim 1, wherein
the cross-sectional shape of the concave portion is virtually the same as that of the rod insertion hole; and
the spring receiving member is formed in a way that, when the spring receiving member is set in an insertion completion position, the center of the concave portion thereof is positioned at the center position of the rod insertion hole.

4. The shift lever apparatus for an automatic transmission according to claim 1, wherein
the shape of an upper surface of the spring receiving member is different from that of a lower surface thereof; and
an opening portion of the receiving member insertion hole is shaped to fit the cross-sectional shapes respectively of the upper and lower surfaces of the spring receiving member.

5. The shift lever apparatus for an automatic transmission according to claim 2, wherein
the lever main body includes a stopper part which is positioned inside the receiving member insertion hole, and which abuts on a deepest surface inside the slit when the spring receiving member is set in an insertion completion position.
